# EUROPEAN PATENT SPECIFICATION

(11) **EP 3 186 262 B1**
(45) Date of publication and mention of the grant of the patent: **29.01.2020**
(21) Application number: 15836219.4
(22) Date of filing: 18.08.2015
(51) Int. Cl.: C07F 7/12, C07F 7/14

(54) **FLUOROSILICON NITRILE COMPOUNDS**
FLUORSILICIUM-NITRIL-VERBINDUNGEN
COMPOSÉS DE FLUOROSILICONE ET DE NITRILE

(30) Priority: 27.08.2014 US 201462042292 P
(43) Date of publication of application: 05.07.2017
(73) Proprietor: Arkema, Inc., King of Prussia, PA 19406 (US)
(72) Inventor: SYVRET, Robert G., Allentown, Pennsylvania 18103 (US); POLSZ, Craig A., Newtown, Pennsylvania 18940 (US)
(74) Representative: Leca, François Michel
(86) International application number: PCT/US2015/045599
(87) International publication number: WO 2016/032792

(56) References cited:
- WO-A2-2014/197609
- GB-A- 981 815
- GB-A- 1 129 898
- US-A- 3 053 874
- US-A- 5 126 468
- US-A- 5 283 348

## Description

### Field of the Invention

The present invention pertains to novel fluorosilicon nitrile compounds and methods for their preparation.

### Discussion of the Related Art

Fluorosilicon nitrile compounds containing one or two fluorine atoms attached to a silicon atom as well as at least one cyanoalkyl group attached to the silicon atom may be used in applications such as battery fabrication (as solvents or additives, for example), semiconductor deposition, fluorosilicone glass formation, and semiconductor etching agents. US 3,053,874 relates to a process for producing cyanoalkylsilanes. US 5,283,348 relates to a process for the preparation of hydrolysable beta-cyanoalkylsilanes. WO 2014/197609 discloses organosilicon compounds including a substituent that is a cyano, cyanate, isocyanate, thiocyanate or isothiocyanate. GB 1,129,898 discloses silicon-containing compounds containing cyano groups.

The synthesis of new fluorosilicon compounds of this type would therefore be of great interest, since such new compounds may have unique and varied properties as compared to known fluorosilicon nitrile compounds.

### Brief Summary of the Invention

One aspect of the present invention provides novel fluorosilicon nitrile compounds, wherein the fluorosilicon nitrile compound has a total of four substituents attached to a silicon atom, wherein one or two of the substituents are fluorine atoms, one or two of the substituents are cyanoalkyl groups containing two cyano groups per cyanoalkyl group, which are the same as or different from each other, and the remainder of the substituents, if any, are alkyl groups, which are the same as or different from each other.
In another aspect of the invention, a method of making a fluorosilicon nitrile compound in accordance with claim 1, wherein the method comprises reacting a chlorosilicon nitrile compound with a fluorinating agent under conditions effective to exchange fluorine atoms for the chlorine atoms in the chlorosilicon nitrile compound and wherein the chlorosilicon nitrile compound has a total of four substituents attached to a silicon atom, wherein one or two of the substituents are chlorine atoms, one or two of the substituents are cyanoalkyl groups containing two cyano groups per cyanoalkyl group, which may be the same as or different from each other, and the remainder of the substituents, if any, are alkyl groups, which are the same as or different from each other, preferably the fluorinating agent is selected from the group consisting of HF, MF, MHF₂ and SbF₃, where M is Na, K, Rb, Cs or NH₄.

Still another aspect of the invention provides a method of making a fluorosilicon nitrile compound in accordance with the foregoing description, wherein the method comprises hydrosilylation of an alkene, especially a cyanoalkene, with a fluoroalkylsilane.

### Detailed Description of Certain Embodiments of the Invention

A fluorosilicon nitrile compound in accordance with the present invention has a total of four substituents attached to a silicon atom, wherein one or two of the substituents are fluorine atoms, one or two of the substituents are cyanoalkyl groups containing two cyano groups per cyanoalkyl group, which are the same as or different from each other, and the remainder of the substituents, if any, are alkyl groups, which are the same as or different from each other. However, the following fluorosilicon nitrile compounds, which are known compounds, are not considered to be within the scope of the present invention: SiF₂(CH₃)(CH₂CH₂CH(CN)CH₃); SiF₂(CH₃)(CH₂CH₂CH₂CN); SiF₂(CH₃)(CH₂CH(CH₃)CH₂CN); and SiF₂[CH₂CH(CH₃)CH₂CN]₂.

In one embodiment of the invention, one substituent attached to the silicon atom is a fluorine atom, one substituent is a cyanoalkyl group, and two substituents are alkyl groups, which are the same as or different from each other.

In another embodiment of the invention, two substituents attached to the silicon atom are fluorine atoms, one substituent is a cyanoalkyl group, and one substituent is an alkyl group.

According to another embodiment, one substituent attached to the silicon atom is a fluorine atom, two substituents are cyanoalkyl groups, which are the same as or different from each other, and one substituent is an alkyl group.

In still another embodiment of the invention, two substituents attached to the silicon atom are fluorine atoms and two substituents are cyanoalkyl groups, which are the same as or different from each other.

The cyanoalkyl group or groups attached to the silicon atom may be C2-C9 cyanoalkyl groups, in one aspect of the invention. If two cyanoalkyl groups are present, they may be the same as or different from each other. The alkyl radical bearing one or more cyano (-CN) groups in the cyanoalkyl group may be a straight chain, branched, or alicyclic-containing alkyl radical. Each cyanoalkyl group may contains two cyano groups per cyanoalkyl group. Each cyano group may be substituted, for example, at a terminal position of an alkyl radical or at an internal position of an alkyl radical. For example, where the alkyl radical is a straight chain C4 alkyl radical, a cyano group may be substituted at the terminal position to provide the cyanoalkyl group -CH₂CH₂CH₂CH₂CN or at an internal position to provide one of the following cyanoalkyl groups: -CH(CN)CH₂CH₂CH₃; -CH₂CH(CN)CH₂CH₃;-CH₂CH₂CH(CN)CH₃.

Suitable cyanoalkyl groups may, for example, be selected from the group consisting of:

-(CH₂)₃C(CN)₂CH₃

-CH(CN)CH(CN)CH₃;

-C(CN)(CH₃)CH₂CN;

-CH(CH₂CN)₂;

-CH(CN)CH₂CH₂CN;

-CH(CH₃)CH(CN)₂;

-C(CN)₂(CH₂CH₃);

-CH₂CH(CN)CH₂CN;

-C(CN)(CH₃)CH₂CN;

-C(CH₃)(CN)CH(CN)CH₂CH₃;

-C(CN)(CH₂CH₃)CH(CN)CH₃;

-CH(CH₂CN)CH₂CH₂CH₂CN;

-CH(CN)CH₂CH₂CH₂CH₂CN;

-CH₂CH(CN)CH₂CH₂CH₂CN;

-C(CH₃)(CN)CH₂CH₂CH₂CN;

-C(CH₃)(CH₂CH₃)CH(CN)₂;

-C(CN)₂CH(CH₃)CH₂CH₃;

-C(CN)₂CH₂CH(CH₃)₂;

-CH(CH(CN)₂)CH(CH₃)₂;

-C(CN)(CH₂CH₃)CH₂CH₂CN;

-CH(CH₃)CH(CN)CH₂CH₂CN;

-CH₂CH(CN)CH₂CH(CN)CH₃;

-C(CN)(CH₃)CH₂CH(CN)CH₃;

-(CH₂)₃CH(CN)CH₂CN;

-CH(CH₃)CH₂CH(CN)CH₂CN;

-CH(CH₂CH₃)CH(CN)CH₂CN;

-C(CN)(CH₂CN)CH₂CH₂CH₃;

-C(CH₃)₂CH(CN)CH₂CN;

-C(CN)(CH₂CN)CH(CH₃)₂;

-C(CH₃)(CH₂CN)CH₂CH₂CN;

-CH(CH₂CN)CH(CH₃)CH₂CN;

-CH₂CH(CH₂CN)CH₂CH₂CN;

-CH₂CH(CH₂CN)CH(CN)CH₃;

-C(CH₃)(CH₂CN)CH(CN)CH₃ ;

-CH(CH(CN)₂)CH₂CH₂CH₃;

-C(CN)₂CH₂CH₂CH₂CH₃;

-CH(CH₂CN)CH₂CH(CN)CH₃;

-CH(CH₂CH₂CN)CH(CN)CH₃;

-CH(CH₃)CH₂CH₂CH(CN)₂;

-CH(CH₂CH₃)CH₂CH(CN)₂;

-CH₂CH(CH₃)CH₂CH(CN)₂;

-C(CH₃)₂CH₂CH(CN)₂;

-CH₂CH₂CH₂C(CN)₂CH₃;

-CH(CH₃)CH₂C(CN)₂CH₃;

-CH(CH(CN)₂)CH(CH₃)₂;

-CH₂CH₂CH(CH₃)CH(CN)₂;

-CH(CH₃)CH(CH₃)CH(CN)₂;

and

-CH₂CH₂CH₂CH₂CH(CN)₂

and combinations thereof, where the fluorosilicon nitrile compound contains two cyanoalkyl groups per molecule.

When at least one alkyl group is present in the fluorosilicon nitrile compound as a substituent attached to the silicon atom, the alkyl group may, for example, be a C1-C8 alkyl group. The alkyl group may be straight chain or branched. If two alkyl groups are attached to the silicon atom, they may be the same as each other or different from each other. Suitable alkyl groups include, for example, methyl, ethyl, n-propyl, iso-propyl, n-butyl, sec-butyl, iso-butyl, tert-butyl, n-pentyl and isomers thereof, n-hexyl and isomers thereof, n-heptyl and isomers thereof, and n-octyl and isomers thereof.

In one aspect of the invention, the fluorosilicon nitrile compound contains, as substituents attached to the silicon atom, one fluorine atom, one cyanoalkyl group, and two C1-C8 alkyl groups, which are the same as or different from each other. In another aspect of the invention, the fluorosilicon nitrile compound contains, as substituents attached to the silicon atom, two fluorine atoms, one cyanoalkyl group and one C1-C8 alkyl group. In these embodiments, the C1-C8 alkyl groups may, for example, be selected from the group consisting of methyl, ethyl, n-propyl, iso-propyl, n-butyl, sec-butyl, iso-butyl, tert-butyl and combinations thereof.

A further embodiment of the invention provides a fluorosilicon nitrile compound of general formula Si(R¹)(R²)(R³)(R⁴), wherein one or two of R¹-R⁴ are fluorine atoms, one or two of R¹-R⁴ are cyanoalkyl groups, which are the same as or different from each other where two cyanoalkyl groups are present, and the remaining R¹-R⁴, if any, are alkyl groups; subject to the proviso that the fluorosilicon nitrile compound is not SiF₂(CH₃)(CH₂CH₂CH(CN)CH₃); SiF₂(CH₃)(CH₂CH₂CH₂CN); SiF₂(CH₃)(CH₂CH(CH₃)CH₂CN); or SiF₂[CH₂CH(CH₃)CH₂CN]₂. The alkyl groups and cyanoalkyl groups may be any of such groups described previously.

For example, R¹ and R² may both be F, R³ may be an alkyl group and R⁴ may be a cyanoalkyl group. Alternatively, R¹ and R² may both be F and R³ and R⁴ may both be cyanoalkyl groups. In yet another aspect, R¹ may be F, R² and R³ may both be alkyl, and R⁴ may be cyanoalkyl. Additionally, in a further aspect of the invention, R¹ may be F, R² may be alkyl, and R³ and R⁴ may both be cyanoalkyl.

Examples of fluorosilicon nitrile compounds are shown in Table I. Each of these compounds may be synthesized from known chlorosilicon nitrile compounds containing Cl atoms, rather than F atoms, substituted on the silicon atom, using the fluorination methods described elsewhere herein.

**Table I.**

| Compound # | Structure | Empirical Formula |
|---|---|---|
| 1 (Comp.) | 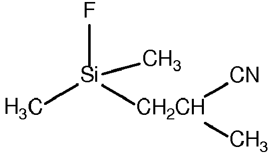 | C₆H₁₂NSiF |
| 2 (Comp.) | 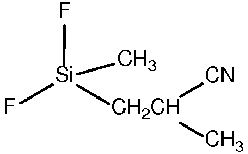 | C₅H₉NSiF₂ |
| 3 (Comp.) | 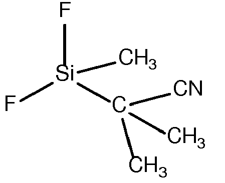 | C₅H₉NSiF₂ |
| 4 (Comp.) | 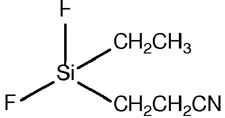 | C₅H₉NSiF₂ |
| 5 (Comp.) | 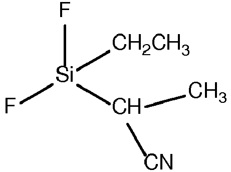 | C₅H₉NSiF₂ |
| 6 (Comp.) | 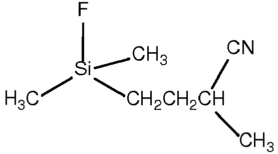 | C₇H₁₄NSiF |
| 7 (Comp.) | 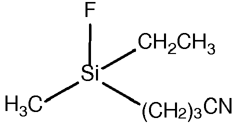 | C₇H₁₄NSiF |
| 8 (Comp.) | 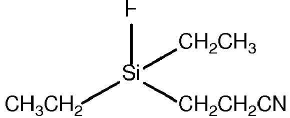 | C₇H₁₄NSiF |
| 9 (Comp.) | 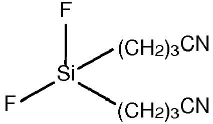 | C₈H₁₂N₂SiF₂ |
| 10 (Comp.) | 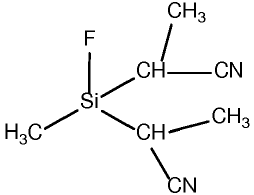 | C₇H₁₁N₂SiF |
| 11 (Comp.) | 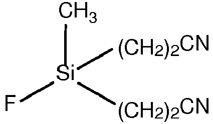 | C₇H₁₁N₂SiF |
| 12 (Comp.) | 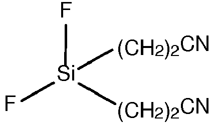 | C₆H₈N₂SiF₂ |
| 13 (Comp.) | 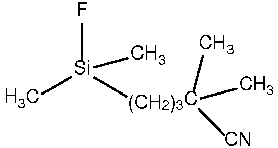 | C₉H₁₈NSiF |
| 14 (Comp.) | 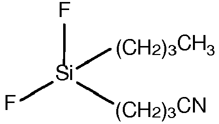 | C₈H₁₅NSiF₂ |
| 15 (Comp.) | 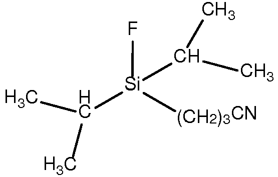 | C₁₀H₂₀NSiF |
| 16 (Comp.) | 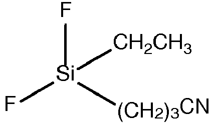 | C₆H₁₁NSiF₂ |

Additional exemplary fluorosilicon nitrile compounds are shown in Table II. These compounds contain one or two fluorine atoms attached to a silicon atom, a cyanoalkyl group attached to the silicon atom, and one or two methyl groups attached to the silicon atom. Also within the scope of the present invention are fluorosilicon compounds homologous or analogous to those shown in Table II in which the methyl group (in the case of the difluoromethylsilicon nitriles) or one or both of the methyl groups (in the case of the fluorodimethylsilicon nitriles) is or are substituted by an alkyl group other than methyl, in particular a branched or straight chain C2-C8 alkyl group such as ethyl, n-propyl, iso-propyl, n-butyl, sec-butyl, iso-butyl, tert-butyl and the like.

**Table II**

| Compound # | Fluorodimethylsilicon Nitrile | Difluoromethylsilicon Nitrile |
|---|---|---|
| 21 (Comp.) | 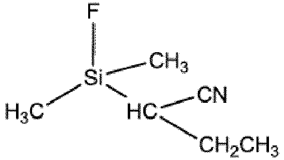 | 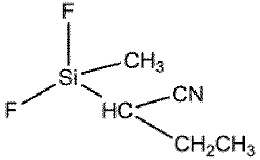 |
| | 21a = C₆H₁₂NSiF | 21b = C₅H₉NSiF₂ |
| | 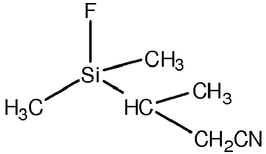 | 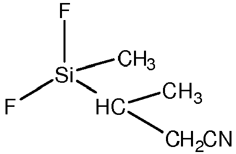 |
| | 21c = C₆H₁₂NSiF | 21d = C₅H₉NSiF₂ |
| 22 | 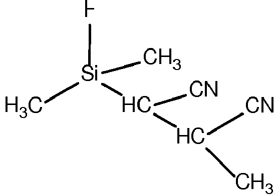 | 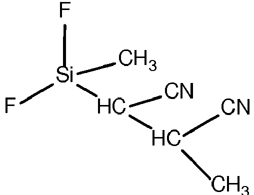 |
| | 22a = C₇H₁₁N₂SiF | 22b = C₆H₈N₂SiF₂ |
| | 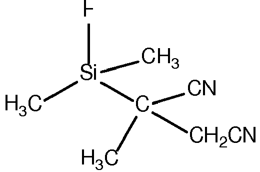 | 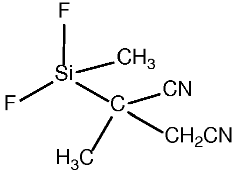 |
| | 22c = C₇H₁₁N₂SiF | 22d = C₆H₈N₂SiF₂ |
| 23 | 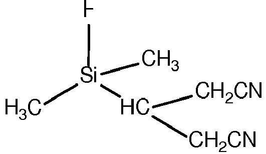 | 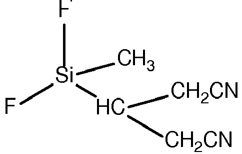 |
| | 23a = C₇H₁₁N₂SiF | 23b = C₆H₈N₂SiF₂ |
| | 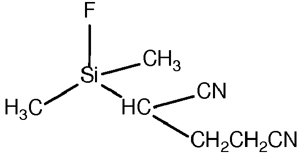 | 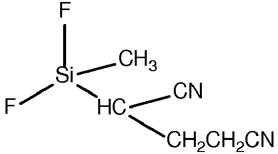 |
| | 23c = C₇H₁₁N₂SiF | 23d = C₆H₈N₂SiF₂ |
| 24 | 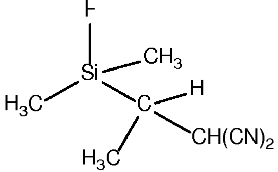 | 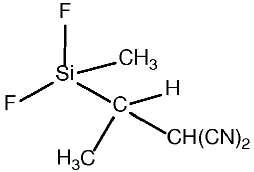 |
| | 24a = C₇H₁₁N₂SiF | 24b = C₆H₈N₂SiF₂ |
| | 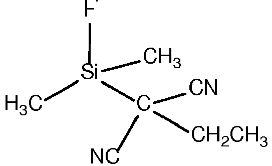 | 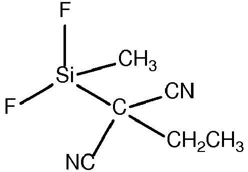 |
| | 24c = C₇H₁₁N₂SiF | 24d = C₆H₈N₂SiF₂ |
| 25 | 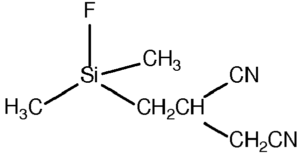 | 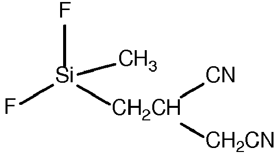 |
| | 25a = C₇H₁₁N₂SiF | 24d = C₆H₈N₂SiF₂ |
| | 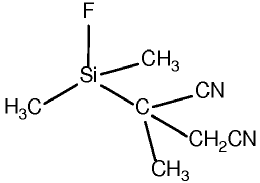 | 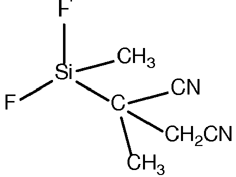 |
| | 25c = C₇H₁₁N₂SiF | 25d = C₆H₈N₂SiF₂ |
| 26 (Comp.) | 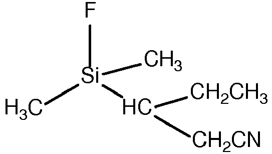 | 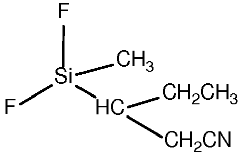 |
| | 26a = C₇H₁₄NSiF | 26b = C₆H₁₁NSiF₂ |
| | 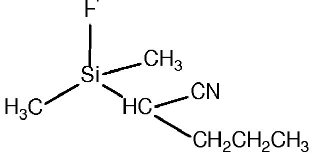 | 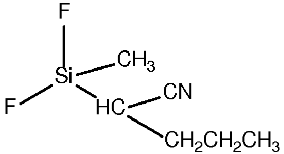 |
| | 26c = C₇H₁₄NSiF | 26d = C₆H₁₁NSiF₂ |
| 27 (Comp.) | 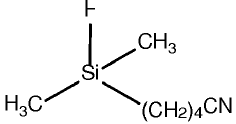 | 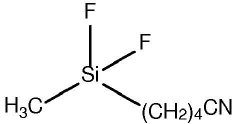 |
| | 27a = C₇H₁₄NSiF | 27b = C₆H₁₁NSiF₂ |
| | 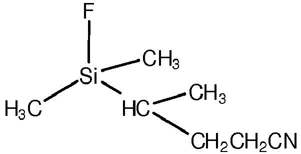 | 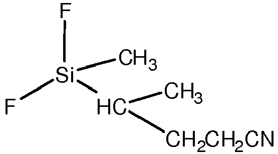 |
| | 27c = C₇H₁₄NSiF | 27d = C₆H₁₁NSiF₂ |
| 28 (Comp.) | 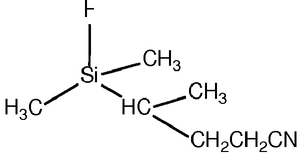 | 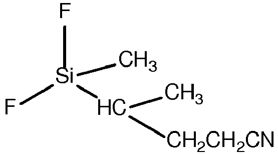 |
| | 28a = C₇H₁₄NSiF | 28b = C₆H₁₁NSiF₂ |
| | 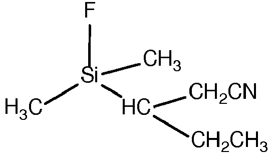 | 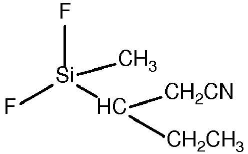 |
| | 28c = C₇H₁₄NSiF | 28d = C₆H₁₁NSiF₂ |
| 29 (Comp.) | 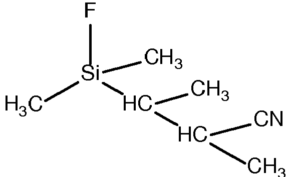 | 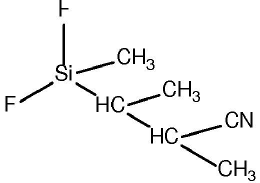 |
| | 29a = C₇H₁₄NSiF | 29b = C₆H₁₁NSiF₂ |
| | 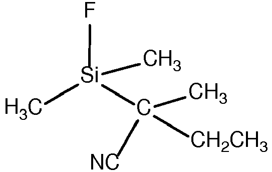 | 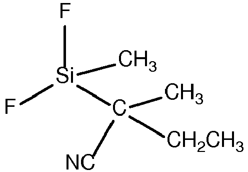 |
| | 29c = C₇H₁₄NSiF | 29d = C₆H₁₁NSiF₂ |
| 30 (Comp.) | 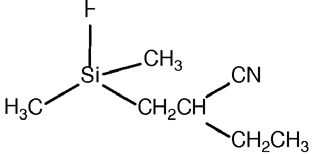 | 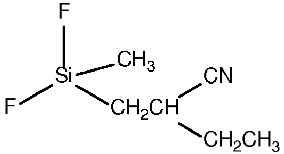 |
| | 30a = C₇H₁₄NSiF | 30b = C₆H₁₁NSiF₂ |
| 31 (Comp.) | 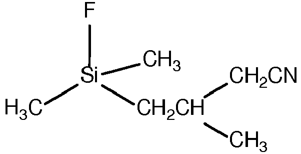 | |
| | 31a = C₇H₁₄NSiF | |
| | 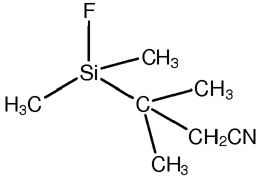 | 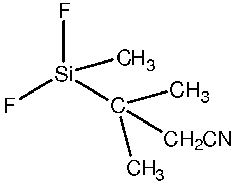 |
| | 31b = C₇H₁₄NSiF | 31c = C₆H₁₁NSiF₂ |
| 32 (Comp.) | 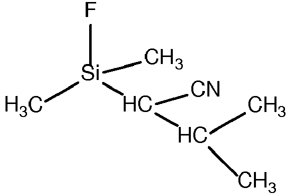 | 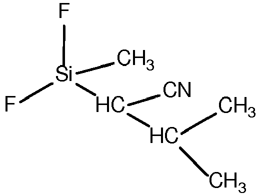 |
| | 32a = C₇H₁₄NSiF | 32b = C₆H₁₁NSiF₂ |
| 33 (Comp.) | 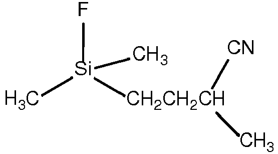 | |
| | 33 = C₇H₁₄NSiF | |
| 34 (Comp.) | 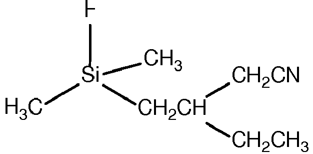 | 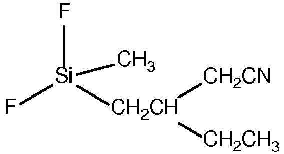 |
| | 34a = C₈H₁₆NSiF | 34b = C₇H₁₃NSiF₂ |
| | 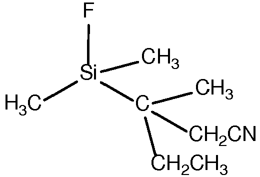 | 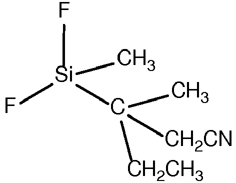 |
| | 34c = C₈H₁₆NSiF | 34d = C₇H₁₃NSiF₂ |
| 35 (Comp.) | 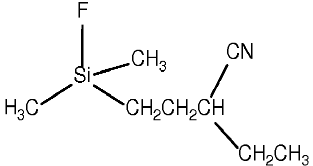 | 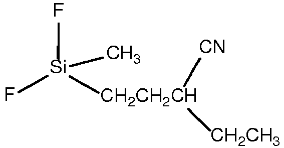 |
| | 35a = C₈H₁₆NSiF | 35b = C₇H₁₃NSiF₂ |
| | 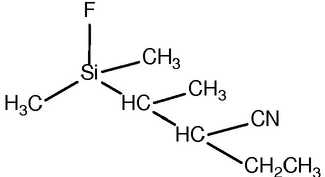 | 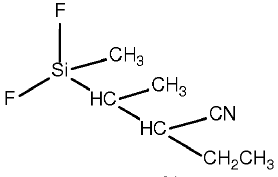 |
| | 35c = C₈H₁₆NSiF | 35d = C₇H₁₃NSiF₂ |
| 36 (Comp.) | 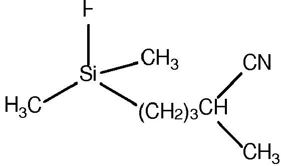 | 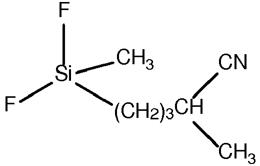 |
| | 36a = C₈H₁₆NSiF | 36b = C₇H₁₃NSiF₂ |
| | 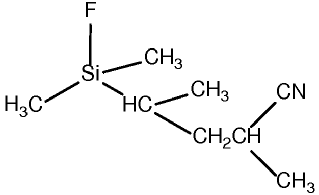 | 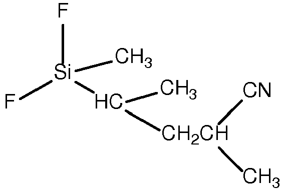 |
| | 36c = C₈H₁₆NSiF | 36d = C₇H₁₃NSiF₂ |
| 37 (Comp.) | 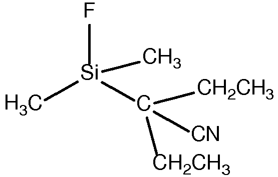 | 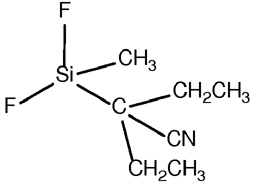 |
| | 37a = C₈H₁₆NSiF | 37b = C₇H₁₃NSiF₂ |
| 38 (Comp.) | 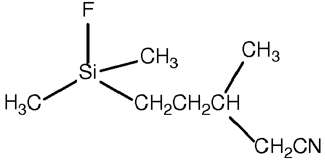 | 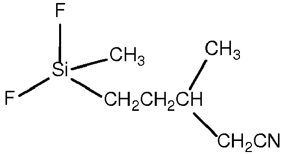 |
| | 38a = C₈H₁₆NSiF | 38b = C₇H₁₃NSiF₂ |
| | 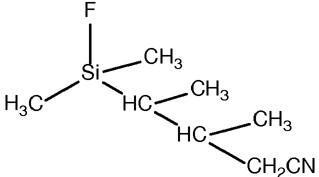 | 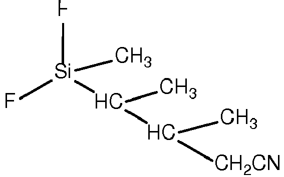 |
| | 38c = C₈H₁₆NSiF | 38d = C₇H₁₃NSiF₂ |
| 39 (Comp.) | 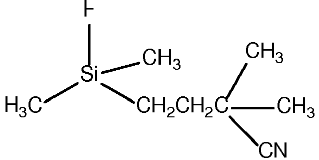 | 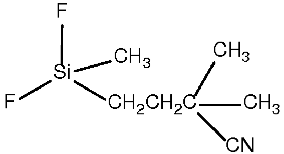 |
| | 39a = C₈H₁₆NSiF | 39b = C₇H₁₃NSiF₂ |
| | 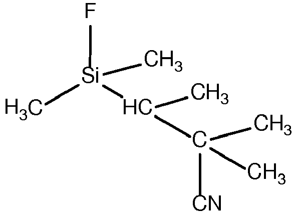 | 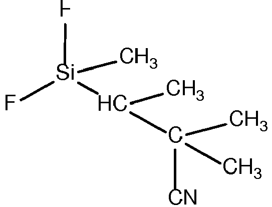 |
| | 39c = C₈H₁₆NSiF | 39d = C₇H₁₃NSiF₂ |
| 40 (Comp.) | 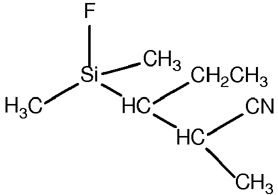 | 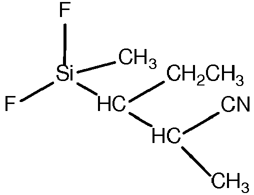 |
| | 40a = C₈H₁₆NSiF | 40b = C₇H₁₃NSiF₂ |
| 41 (Comp.) | 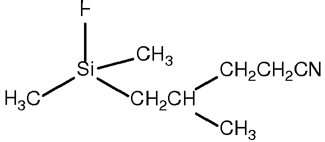 | 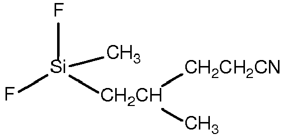 |
| | 41a = C₈H₁₆NSiF | 41b = C₇H₁₃NSiF₂ |
| | 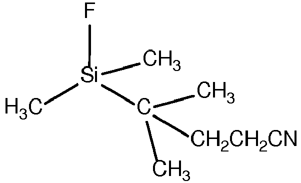 | 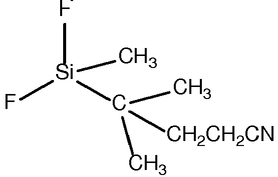 |
| | 41c = C₈H₁₆NSiF | 41d = C₇H₁₃NSiF₂ |
| 42 (Comp.) | 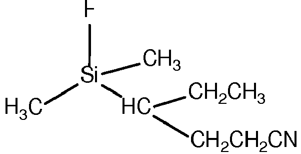 | 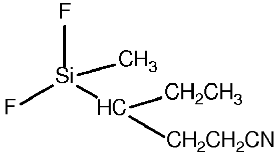 |
| | 42a = C₈H₁₆NSiF | 42b = C₇H₁₃NSiF₂ |
| | 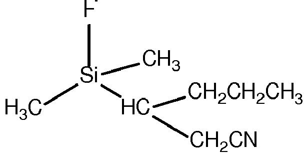 | 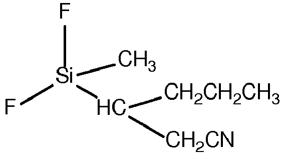 |
| | 42c = C₈H₁₆NSiF | 42d = C₇H₁₃NSiF₂ |
| 43 (Comp.) | 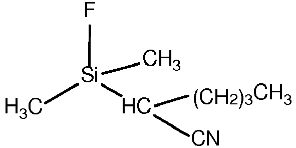 | 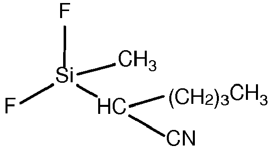 |
| | 43a = C₈H₁₆NSiF | 43b = C₇H₁₃NSiF₂ |
| 44 (Comp.) | 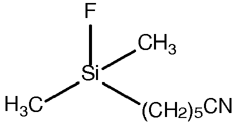 | 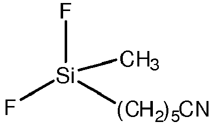 |
| | 44a = C₈H₁₆NSiF | 44b = C₇H₁₃NSiF₂ |
| | 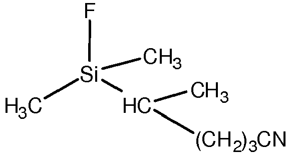 | 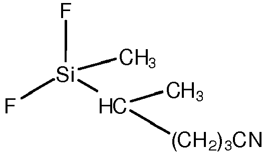 |
| | 44c = C₈H₁₆NSiF | 44d = C₇H₁₃NSiF₂ |
| 45 (Comp.) | 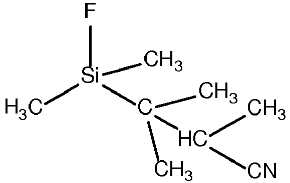 | 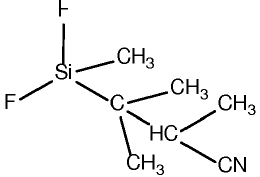 |
| | 45a = C₈H₁₆NSiF | 45b = C₇H₁₃NSiF₂ |
| | 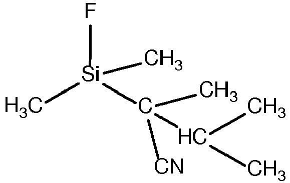 | 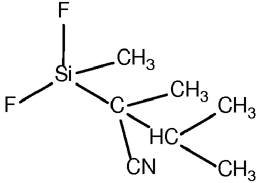 |
| | 45c = C₈H₁₆NSiF | 45d = C₇H₁₃NSiF₂ |
| 46 (Comp.) | 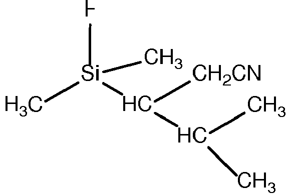 | 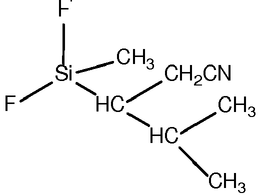 |
| | 46a = C₈H₁₆NSiF | 46b = C₇H₁₃NSiF₂ |
| 47 (Comp.) | 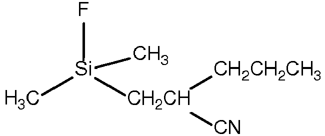 | 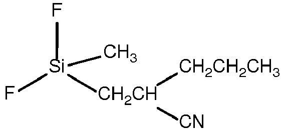 |
| | 47a = C₈H₁₆NSiF | 47b = C₇H₁₃NSiF₂ |
| | 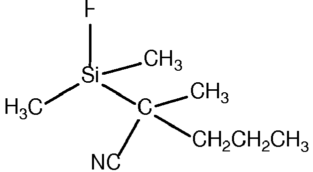 | 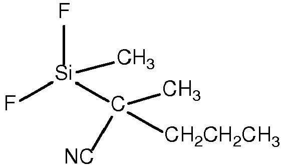 |
| | 47c = C₈H₁₆NSiF | 47d = C₇H₁₃NSiF₂ |
| 48 (Comp.) | 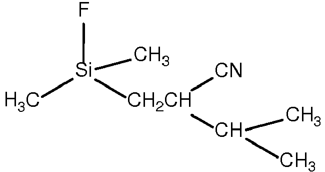 | 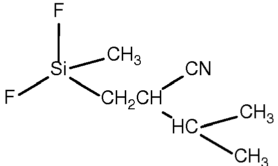 |
| | 48a = C₈H₁₆NSiF | 48b = C₇H₁₃NSiF₂ |
| 49 (Comp.) | 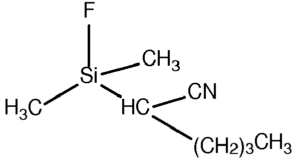 | 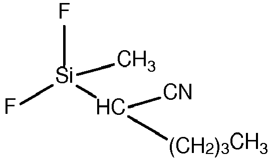 |
| | 49a = C₈H₁₆NSiF | 49b = C₇H₁₃NSiF₂ |
| 50 (Comp.) | 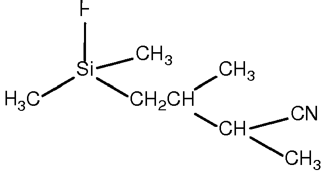 | 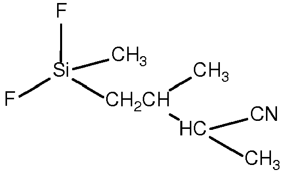 |
| | 50a = C₈H₁₆NSiF | 50b = C₇H₁₃NSiF₂ |
| 51 (Comp.) | 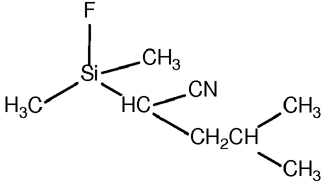 | 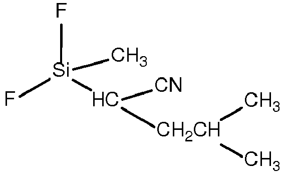 |
| | 51a = C₈H₁₆NSiF | 51b = C₇H₁₃NSiF₂ |
| 52 (Comp.) | 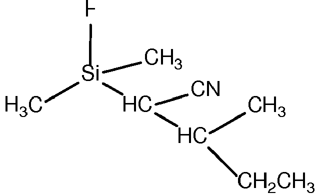 | 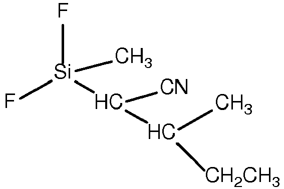 |
| | 52a = C₈H₁₆NSiF | 52b = C₇H₁₃NSiF₂ |
| 53 | 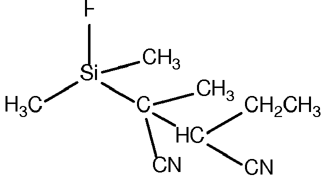 | 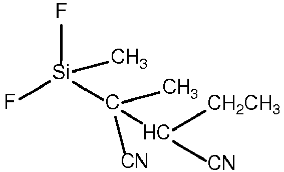 |
| | 53a = C₉H₁₅N₂SiF | 53b = C₈H₁₂N₂SiF₂ |
| | 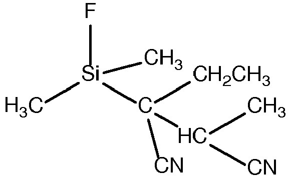 | 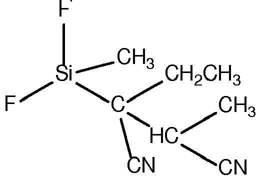 |
| | 53c = C₉H₁₅N₂SiF | 53d = C₈H₁₂N₂SiF₂ |
| 54 | 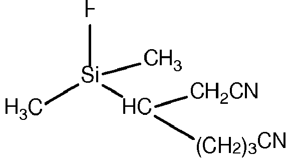 | 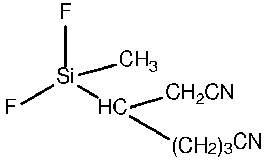 |
| | 54a = C₉H₁₅N₂SiF | 54b = C₈H₁₂N₂SiF₂ |
| | 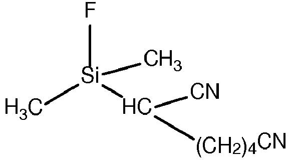 | 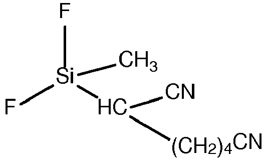 |
| | 54c = C₉H₁₅N₂SiF | 54d = C₈H₁₂N₂SiF₂ |
| 55 | 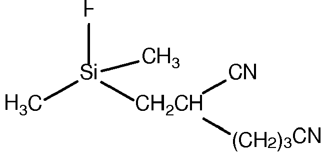 | 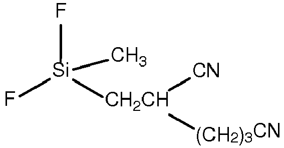 |
| | 55a = C₉H₁₅N₂SiF | 55b = C₈H₁₂N₂SiF₂ |
| | 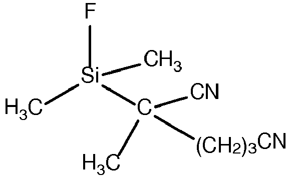 | 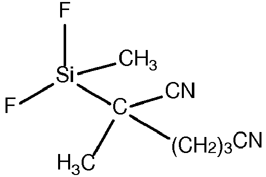 |
| | 55c = C₉H₁₅N₂SiF | 55d = C₈H₁₂N₂SiF₂ |
| 56 | 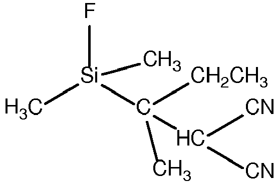 | 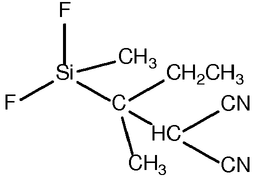 |
| | 56a = C₉H₁₅N₂SiF | 56b = C₈H₁₂N₂SiF₂ |
| | 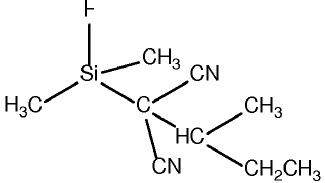 | 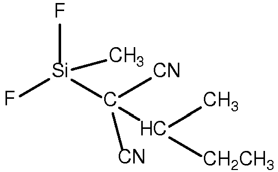 |
| | 56c = C₉H₁₅N₂SiF | 56d = C₈H₁₂N₂SiF₂ |
| 57 | 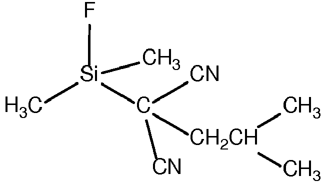 | 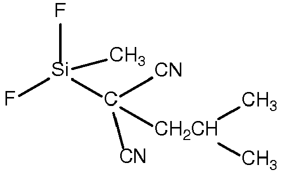 |
| | 57a = C₉H₁₅N₂SiF | 57b = C₈H₁₂N₂SiF₂ |
| | 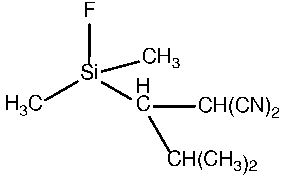 | 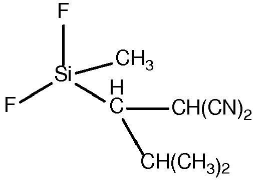 |
| | 57c = C₉H₁₅N₂SiF | 57d = C₈H₁₂N₂SiF₂ |
| 58 | 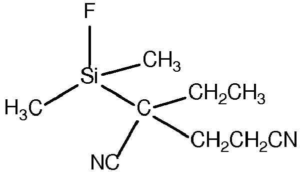 | 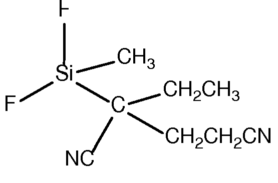 |
| | 58a = C₉H₁₅N₂SiF | 58b = C₈H₁₂N₂SiF₂ |
| | 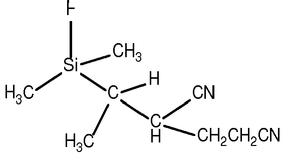 | 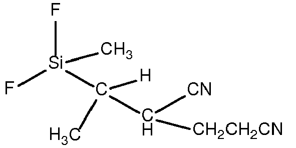 |
| | 58c = C₉H₁₅N₂SiF | 58d = C₈H₁₂N₂SiF₂ |
| 59 | 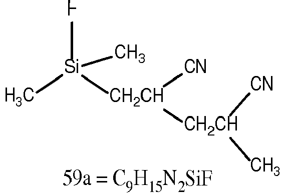 | 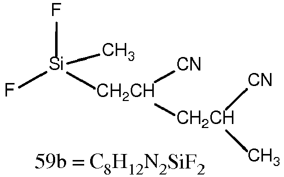 |
| | 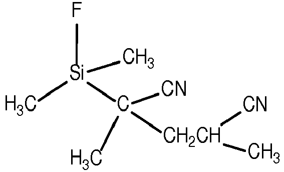 | 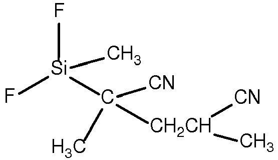 |
| | 59c = C₉H₁₅N₂SiF | 59d = C₈H₁₂N₂SiF₂ |
| 60 | 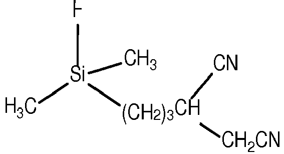 | 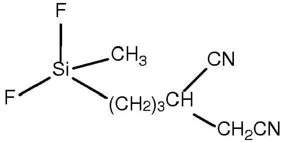 |
| | 60a = C₉H₁₅N₂SiF | 60b = C₈H₁₂N₂SiF₂ |
| | 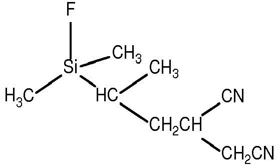 | 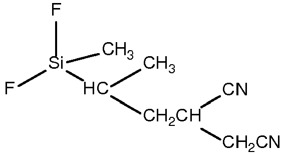 |
| | 60c = C₉H₁₅N₂SiF | 60d = C₈H₁₂N₂SiF₂ |
| 61 | 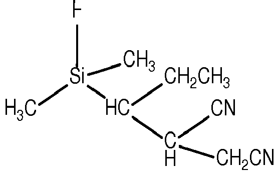 | 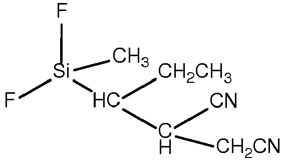 |
| | 61a = C₉H₁₅N₂SiF | 61b = C₈H₁₂N₂SiF₂ |
| 62 | 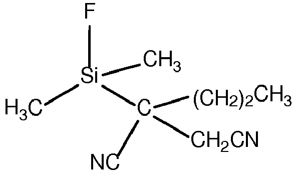 | 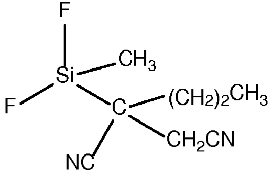 |
| | 62a = C₉H₁₅N₂SiF | 62b = C₈H₁₂N₂SiF₂ |
| 63 | 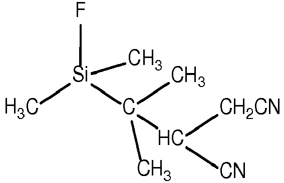 | 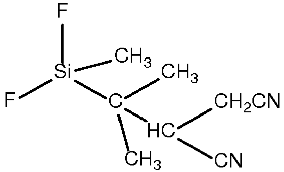 |
| | 63a = C₉H₁₅N₂SiF | 63b = C₈H₁₂N₂SiF₂ |
| | 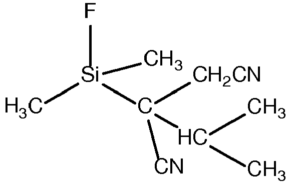 | 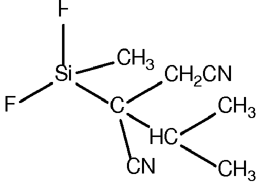 |
| | 63c = C₉H₁₅N₂SiF | 63d = C₈H₁₂N₂SiF₂ |
| 64 | 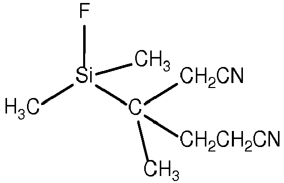 | 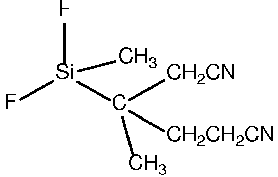 |
| | 64a = C₉H₁₅N₂SiF | 64b = C₈H₁₂N₂SiF₂ |
| | 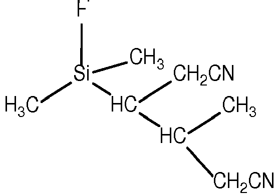 | 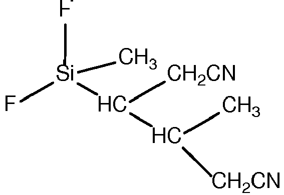 |
| | 64c = C₉H₁₅N₂SiF | 64d = C₈H₁₂N₂SiF₂ |
| 65 | 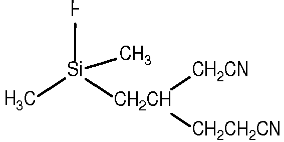 | 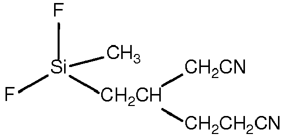 |
| | 65a = C₉H₁₅N₂SiF | 65b = C₈H₁₂N₂SiF₂ |
| 66 | 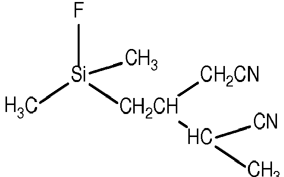 | 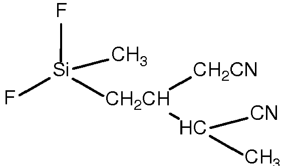 |
| | 66a = C₉H₁₅N₂SiF | 66b = C₈H₁₂N₂SiF₂ |
| | 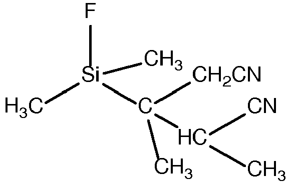 | 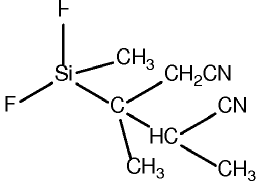 |
| | 66c = C₉H₁₅N₂SiF | 66d = C₈H₁₂N₂SiF₂ |
| 67 | 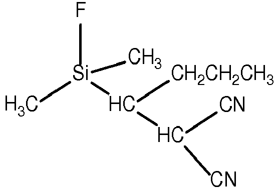 | 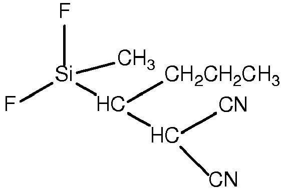 |
| | 67a = C₉H₁₅N₂SiF | 67b = C₈H₁₂N₂SiF₂ |
| | 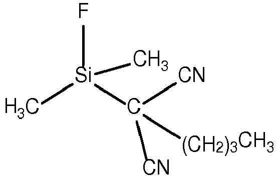 | 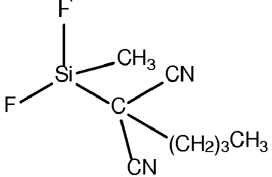 |
| | 67c = C₉H₁₅N₂SiF | 67d = C₈H₁₂N₂SiF₂ |
| 68 | 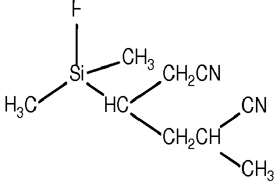 | 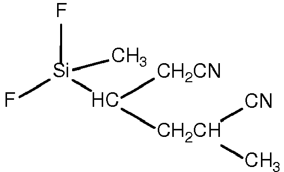 |
| | 68a = C₉H₁₅N₂SiF | 68b = C₈H₁₂N₂SiF₂ |
| | 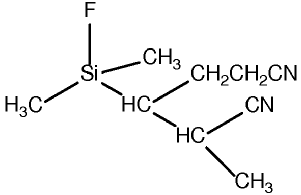 | 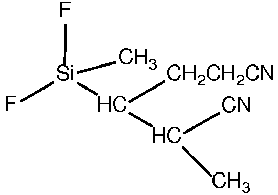 |
| | 68c = C₉H₁₅N₂SiF | 68d = C₈H₁₂N₂SiF₂ |
| 69 | 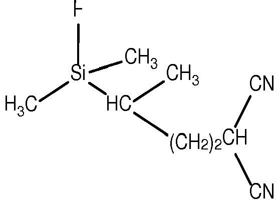 | 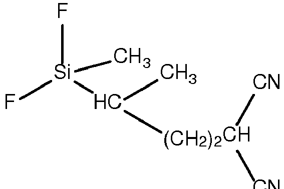 |
| | 69a = C₉H₁₅N₂SiF | 69b = C₈H₁₂N₂SiF₂ |
| | 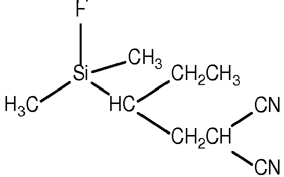 | 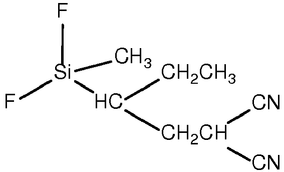 |
| | 69c = C₉H₁₅N₂SiF | 69d = C₈H₁₂N₂SiF₂ |
| 70 | 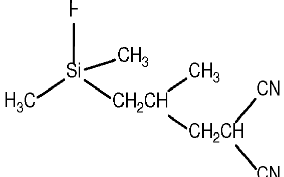 | 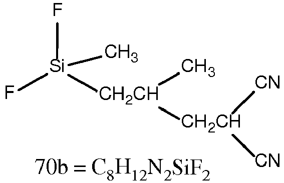 |
| | 70a = C₉H₁₅N₂SiF | |
| | 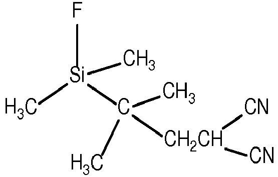 | 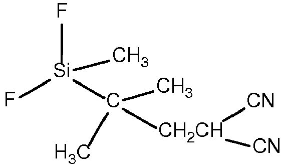 |
| | 70c = C₉H₁₅N₂SiF | 70d = C₈H₁₂N₂SiF₂ |
| 71 | 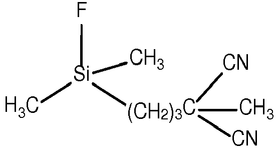 | 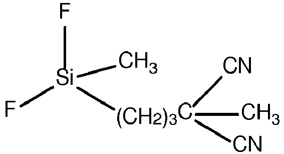 |
| | 71a = C₉H₁₅N₂SiF | 71b = C₈H₁₂N₂SiF₂ |
| | 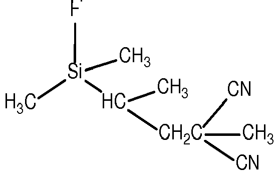 | 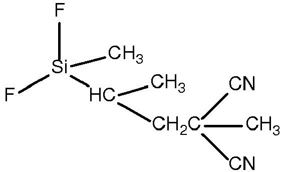 |
| | 71c = C₉H₁₅N₂SiF | 7bd = C₈H₁₂N₂SiF₂ |
| 72 | 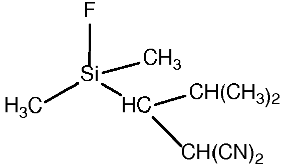 | 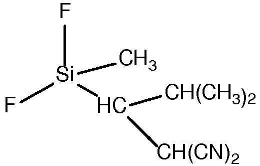 |
| | 72a = C₉H₁₅N₂SiF | 72b = C₈H₁₂N₂SiF₂ |
| 73 | 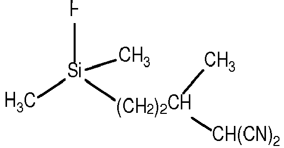 | 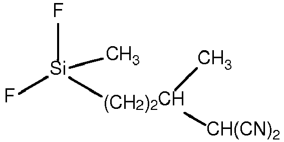 |
| | 73a = C₉H₁₅N₂SiF | 73b = C₈H₁₂N₂SiF₂ |
| | 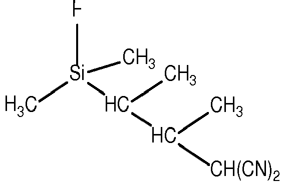 | 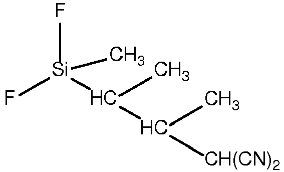 |
| | 73c = C₉H₁₅N₂SiF | 73d = C₈H₁₂N₂SiF₂ |
| 74 | 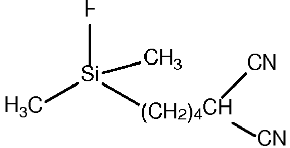 | 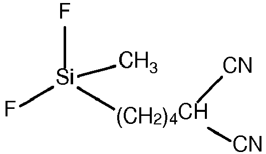 |
| | 74a = C₉H₁₅N₂SiF | 74b = C₈H₁₂N₂SiF₂ |

Also provided by the present invention are methods of making the above-mentioned fluorosilicon nitrile compounds.

In one aspect of the invention, a method is provided which comprises reacting a chlorosilicon nitrile compound with a fluorinating agent under conditions effective to exchange fluorine atoms for the chlorine atoms in the chlorosilicon nitrile compound. The chlorosilicon nitrile compound has a total of four substituents attached to a silicon atom, wherein one or two of the substituents are chlorine atoms, one or two of the substituents are cyanoalkyl groups containing two cyano groups per cyanoalkyl group, which may be the same as or different from each other, and the remainder of the substituents, if any, are alkyl groups, which are the same as or different from each other. The chlorosilicon nitrile compound may correspond to general formula Si(R¹)(R²)(R³)(R⁴), wherein one or two of R¹-R⁴ are chlorine atoms, one or two of R¹-R⁴ are cyanoalkyl groups, which are the same as or different from each other where two cyanoalkyl groups are present, and the remaining R¹-R⁴, if any, are alkyl groups.

The fluorinating agent may, for example, be selected from the group consisting of HF, MF, MHF₂ and SbF₃, where M is Na, K, Rb, Cs or NH₄. Fluorides of antimony, zinc, lead, mercury, silver, cobalt, copper, tungsten and other metals may be utilized as the fluorinating agent. Sodium fluoroborate may also be used, as can mixtures of SbF₃ and BF₃ or NaF and sulfuric acid. Other suitable fluorinating agents include neat BF₃, BF₃ etherates, Na₂SiF6, NaPF6, NaSbF6, NaBF₄, Me₃SnF, PF₅, PhCBF₄, NOBF₄, and NO₂BF₄. If HF (hydrogen fluoride) is employed, it may be used in anhydrous form or in an aqueous-alcoholic or aqueous medium. Potassium hydrogen difluoride and ammonium hydrogen difluoride (ammonium bifluoride) are especially useful fluorinating agents.

Certain of the chlorosilicon nitrile compounds useful as the starting material in the aforementioned fluorination reaction are known compounds that may be prepared using methods known in the art. Such compounds include, for example, compounds having the following CAS registration numbers: 42759-42-2; 59343-99-6; 42759-43-3; 100792-00-5; 1068-40-2; 18243-57-7; 1274903-71-7; 876343-97-4; 2617-09-6; 18276-25-0; 18135-77-8; 103613-06-5; 1071-17-6; 18727-31-6; 7031-17-6; 169206-21-7; 875478-07-2; 161582-95-2; 113641-37-5; and 1186-40-9. Additional chlorosilicon nitrile compounds may be readily synthesized by hydrosilylation of an alkene with a chloroalkylsilane. In one embodiment of such a synthesis, the alkene is a cyanoalkene. The cyanoalkene may suitably be a C3-C10 cyanoalkene, for example, and may contain a single carbon-carbon double bond and one, two or more cyano (-CN) groups per molecule. The structure of the cyanoalkene is selected so as to provide a cyanoalkyl group of the type desired in the fluorosilicon nitrile produced by hydrosilylation. Illustrative examples of suitable cyanoalkenes include, but are not limited to, CH₃CH=CHCN (CAS 4786-20-3); CH₃C(CN)=CHCN (CAS 70240-55-0); NCCH₂CH=CHCN (CAS 7717-24-0); CH₃CH=C(CN)₂ (CAS 1508-07-2); CH₂=C(CN)CH₂CN (CAS 24412-94-0); CH₃CH₂CH=CHCN (CAS 13284-42-9); CH₂=CHCH₂CH₂CN (CAS 592-51-8); CH₃CH=CHCH₂CN (CAS 4635-87-4); CH₃CH=C(CN)CH₃ (CAS 4403-61-6); CH₂=C(CN)CH₂CH₃ (CAS 1647-11-6); CH₂=C(CH₃)CH₂CN (CAS 4786-19-0); (CH₃)₂C=CHCN (CAS 4786-24-7); CH₂=CHCH(CN)CH₃ (CAS 16529-56-9); CH₂=C(CH₂CN)CH₂CH₃ (CAS 1462956-36-0); CH₂=CHCH(CN)CH₂CH₃ (CAS 180974-28-1); CH₂=CHCH₂CH(CN)CH₃ (CAS 89464-18-6); CH₃CH₂C(CN)=CHCH₃ (CAS 89580-25-6); CH₂=CHCH(CH₃)CH₂CN (CAS 51980-04-2); CH₂=CHC(CH₃)₂CN (CAS 41405-16-7); CH₃CH(CN)CH=CHCH₃ (CAS 37674-62-7); CH₂=C(CH₃)CH₂CH₂CN (CAS 34998-36-2); CH₃CH₂CH=CHCH₂CN (CAS 16170-44-8); CH₃CH₂CH₂CH=CHCN (CAS 5636-69-1); CH₂=CHCH₂CH₂CH₂CN (CAS 5048-19-1); (CH₃)₂C=C(CH₃)CN (CAS 4786-37-2); (CH₃)₂C=CHCH₂CN (CAS 4786-23-6); CH₂=C(CN)CH₂CH₂CH₃ (CAS 3931-57-5); CH₂=C(CN)CH(CH₃)₂ (CAS 2813-69-6); CH₃CH₂CH₂CH=CHCN (CAS 67889-07-0); CH₂=C(CH₃)CH(CN)CH₃ (CAS 25653-08-1); (CH₃)₂CHCH=CHCN (CAS 19124-15-3); CH₃CH₂C(CH₃)=CHCN (CAS 14799-77-0); CH₃C(CN)=C(CN)CH₂CH₃ (CAS 1003003-54-0); NCCH₂CH₂CH₂CH=CHCN (CAS 872307-67-0); CH₂=C(CN)CH₂CH₂CH₂CN (CAS 856347-40-5); CH₃CH₂C(CH₃)=C(CN)₂ (CAS 13017-50-0); (CH₃)₂CHCH=C(CN)₂ (CAS 13134-03-7); CH₃CH=C(CN)CH₂CH₂CN (CAS 22485-88-7); CH₂=C(CN)CH₂CH(CN)CH₃ (CAS 35299-21-9); CH₂=CHCH₂CH(CN)CH₂CN (CAS 364453-09-5); CH₃CH=CHCH(CN)CH₂CN (CAS 36453-10-8); CH₃CH₂CH=C(CN)CH₂CN (CAS 36453-11-9); (CH₃)₂C=C(CN)CH₂CN (CAS 67386-03-2); NCCH₂C(CH₃)=CHCH₂CN (CAS 76257-96-0); CH₂=C(CH₂CN)CH₂CH₂CN (CAS 80718-20-3); CH₂=C(CH₂CN)CH(CN)CH₃ (CAS 80718-26-9); CH₃CH₂CH₂CH=C(CN)₂ (CAS 87948-15-0); CH₃CH(CN)CH=CHCH₂CN (CAS 122917-04-8); (NC)₂CHCH₂CH=CHCH₃ (CAS 130575-29-0); CH₂=C(CH₃)CH₂CH(CN)₂ (CAS 145050-18-6); CH₂=CHCH₂C(CN)₂CH₃ (CAS 154657-02-0); (CH₃)₂C=CHCH(CN)₂ (CAS 442661-89-4); CH₂=CHCH(CH₃)CH(CN)₂ (CAS 443124-95-6); and CH₂=CHCH₂CH₂CH(CN)₂ (CAS 475197-78-5).

The chloroalkylsilane may be a silane containing, as substituents attached to the silicon atom, one or two hydrogen atoms, one chlorine atom and one or two alkyl groups, which may be the same as each other or different from each other. Where one hydrogen atom is present, one molecule of cyanoalkene reacts with one molecule of chloroalkylsilane in the hydrosilylation reaction, thereby introducing a single cyanoalkyl group into the silane. When two hydrogen atoms are present, two molecules of cyanoalkene react with one molecule of chloroalkylsilane, thereby introducing two cyanoalkyl groups into the silane. In this embodiment, the chloroalkyl silane may correspond to the general structure SiCl(H)ₙ(R)₃₋ₙ, where n is 1 or 2 and R is alkyl. In another aspect of the invention, the chloroalkyl silane may be a silane containing, as substituents attached to the silicon atom, one or two hydrogen atoms, two chlorine atoms, and, where only one hydrogen atom is attached to silicon, a single alkyl group. In this embodiment, the chloroalkyl silane may correspond to the general structure SiCl₂(H)ₙ(R)₂₋ₙ, where n is 1 or 2 and R, if present, is alkyl. Where one hydrogen atom is present, one molecule of cyanoalkene reacts with one molecule of chloroalkylsilane in the hydrosilylation reaction, thereby introducing a single cyanoalkyl group into the silane. When two hydrogen atoms are present, two molecules of alkene react with one molecule of chloroalkylsilane, thereby introducing two cyanoalkyl groups into the silane.

The alkyl groups may, for example, be a C1-C8 alkyl group such as methyl, ethyl, n-propyl, isopropyl, n-butyl and isomers thereof, n-pentyl and isomers thereof, n-hexyl and isomers thereof, n-heptyl and isomers thereof, n-octyl and isomers thereof and combinations of such alkyl groups. The chloroalkylsilane thus may correspond to the general formula HSi(R¹)(R²)(R³), wherein one or two of R¹-R³ are chlorine atoms and the remaining R¹-R³ are alkyl groups, which may be the same as or different from each other where more than one alkyl group per molecule is present.

An example of such a synthetic reaction scheme is shown below. In this example, the alkene 2-cyanobut-1-ene (CAS # 1647-11-6) is hydrosilylated with chlorodimethylsilane (CDMS), leading to a chlorosilicon nitrile having the structure shown (Reaction 1A). The chlorosilicon nitrile is then reacted with a fluorinating agent to produce fluorosilicon nitrile compound 30a having the structure shown (Reaction 1B).

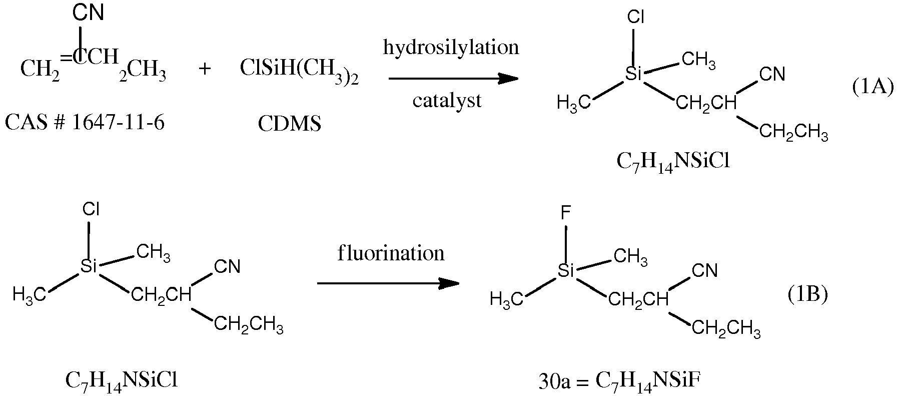

A further method of making a fluorosilicon nitrile compound in accordance with the present invention comprises hydrosilylation of an alkene with a fluoroalkylsilane (i.e., reacting the alkene and fluoroalkylsilane under hydrosilylation conditions). The reacted alkene may be a cyanoalkene, for example. Suitable cyanoalkenes include any of the previously mentioned cyanoalkenes.

The fluoroalkylsilane may be a silane containing, as substituents attached to the silicon atom, one or two hydrogen atoms, one fluorine atom and one or two alkyl groups, which may be the same as each other or different from each other. The total number of hydrogen atoms, fluorine atom, and alkyl groups equals four. Where one hydrogen atom attached to silicon is present, one molecule of cyanoalkene reacts with one molecule of fluoroalkylsilane in the hydrosilylation reaction, thereby introducing a single cyanoalkyl group into the silane. When two hydrogen atoms attached to silicon are present, two molecules of cyanoalkene react with one molecule of fluoroalkylsilane, thereby introducing two cyanoalkyl groups into the silane. In this embodiment, the fluoroalkyl silane may correspond to the general structure SiF(H)ₙ(R)₃₋ₙ, where n is 1 or 2 and R is alkyl. In another aspect of the invention, the fluoroalkyl silane may be a silane containing, as substituents attached to the silicon atom, one or two hydrogen atoms, two fluorine atoms, and, where only one hydrogen atom is attached to silicon, a single alkyl group. The total number of hydrogen atoms, fluorine atoms and alkyl group equals four. In this embodiment, the fluoroalkyl silane may correspond to the general structure SiF₂(H)ₙ(R)₂₋ₙ, where n is 1 or 2 and R, if present, is alkyl. Where one hydrogen atom attached to silicon is present, one molecule of cyanoalkene reacts with one molecule of fluoroalkylsilane in the hydrosilylation reaction, thereby introducing a single cyanoalkyl group into the silane. When two hydrogen atoms attached to silicon are present, two molecules of cyanoalkene react with one molecule of fluoroalkylsilane, thereby introducing two cyanoalkyl groups into the silane.

The alkyl groups may, for example, be a C1-C8 alkyl group such as methyl, ethyl, n-propyl, isopropyl, n-butyl and isomers thereof, n-pentyl and isomers thereof, n-hexyl and isomers thereof, n-heptyl and isomers thereof, n-octyl and isomers thereof and combinations of such alkyl groups.

The fluoroalkylsilane thus may correspond to the general formula HSi(R¹)(R²)(R³), wherein one or two of R¹-R³ are fluorine atoms and the remaining R¹-R³ are alkyl groups, which may be the same as or different from each other where more than one alkyl group per molecule is present.

The following reaction scheme (Reaction 1C) is an example of such a reaction. In this example, fluorosilicon nitrile compound 30a is prepared by direct hydrosilylation of the alkene 2-cyanobut-1-ene with fluorodimethylsilane (FDMS).

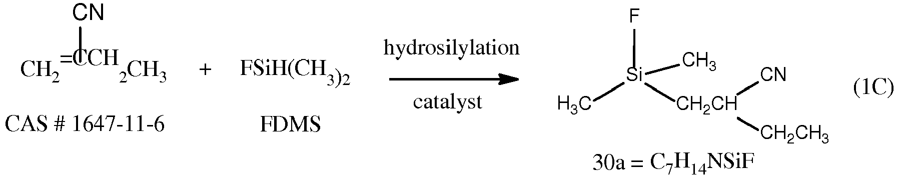

In one embodiment of the invention, the above-mentioned hydrosilylation reactions are carried out in the presence of a hydrosilylation catalyst, in particular an organoplatinum coordination complex having activity as a hydrosilylation catalyst. Karstedt's catalyst, which is an organoplatinum compound derived from divinyl-containing disiloxane (by treatment of chloroplatinic acid with divinyltetramethyldisiloxane), is an example of a suitable catalyst for this purpose. Other suitable hydrosilylation catalysts include, for example, Wilkinson's catalyst (tris(triphenylphosphone)rhodium (I) chloride), the cobalt carbonyl complex Co₂(CO)₈, and H₂PtCl₆ (Speier's catalyst). Hydrosilylation typically proceeds in an anti-Markovnikov manner. However, depending upon the reaction conditions used, hydrosilylation may not be completely selective; that is, a mixture of isomeric hydrosilylation products may be obtained. The individual components of such reaction product mixtures may be purified and isolated using any conventionally known techniques, such as fractional distillation. Alternatively, the mixture of components may be utilized for the desired end use without such fractionation or separation.

Typically, where it is desired to introduce a single cyanoalkyl group into a silane, the molar ratio of cyanoalkene to fluoroalkylsilane may be approximately 1:1, e.g., from about 0.7:1 to about 1.3:1. If it is desired to introduce two cyanoalkyl groups, the molar ratio of cyanoalkene to fluoroalkylsilane may be approximately 2:1, e.g., from about 1.5:1 to about 2.5:1. The hydrosilylation may be carried out using an organic solvent, e.g., an aromatic hydrocarbon, as a reaction medium. The mixture of cyanoalkene, fluoroalkylsilane, hydrosilylation catalyst and optional solvent may be heated for a time and at a temperature effective to provide the desired conversion of the starting materials. For example, reaction temperatures of from about 50°C to about 110°C and reaction times of from about 1 to about 6 hours may be utilized.

## Claims

1. A fluorosilicon nitrile compound having a total of four substituents attached to a silicon atom, wherein one or two of the substituents are fluorine atoms, one or two of the substituents are cyanoalkyl groups containing two cyano groups per cyanoalkyl group, which are the same as or different from each other, and the remainder of the substituents, if any, are alkyl groups, which are the same as or different from each other.

2. The fluorosilicon nitrile compound of claim 1, wherein one substitutent is a fluorine atom, one substituent is a cyanoalkyl group containing two cyano groups per cyanoalkyl group, and two substituents are alkyl groups, which are the same as or different from each other or wherein one substituent is a fluorine atom, two substituents are cyanoalkyl groups containing two cyano groups per cyanoalkyl group, which are the same as or different from each other, and one substituent is an alkyl group.

3. The fluorosilicon nitrile compound of claim 1, wherein two substituents are fluorine atoms, one substituent is a cyanoalkyl group containing two cyano groups per cyanoalkyl group, and one substituent is an alkyl group or wherein two substituents are fluorine atoms and two substituents are cyanoalkyl groups containing two cyano groups per cyanoalkyl group, which are the same as or different from each other.

4. The fluorosilicon nitrile compound of claim 1, wherein the cyanoalkyl groups are C2-C9 cyanoalkyl groups.

5. The fluorosilicon nitrile compound of claim 1, wherein at least one alkyl group is present and the alkyl group is a C1-C8 alkyl group.

6. The fluorosilicon nitrile compound of claim 1, wherein the cyanoalkyl groups contain a cyano group which is substituted at a terminal position of an alkyl radical or at an internal position of an alkyl radical.

7. The fluorosilicon nitrile compound of claim 1, wherein the cyanoalkyl groups are selected from the group consisting of:
-(CH2)3C(CN)2CH3;
-CH(CN)CH(CN)CH₃;
-C(CN)(CH₃)CH₂CN;
-CH(CH₂CN)₂;
-CH(CN)CH₂CH₂CN;
-CH(CH₃)CH(CN)₂;
-C(CN)₂(CH₂CH₃);
-CH₂CH(CN)CH₂CN;
-C(CN)(CH₃)CH₂CN;
-C(CH₃)(CN)CH(CN)CH₂CH₃;
-C(CN)(CH₂CH₃)CH(CN)CH₃;
-CH(CH₂CN)CH₂CH₂CH₂CN;
-CH(CN)CH₂CH₂CH₂CH₂CN;
-CH₂CH(CN)CH₂CH₂CH₂CN;
-C(CH₃)(CN)CH₂CH₂CH₂CN;
-C(CH₃)(CH₂CH₃)CH(CN)₂;
-C(CN)₂CH(CH₃)CH₂CH₃;
-C(CN)₂CH₂CH(CH₃)₂;
-CH(CH(CN)₂)CH(CH₃)₂;
-C(CN)(CH₂CH₃)CH₂CH₂CN;
-CH(CH₃)CH(CN)CH₂CH₂CN;
-CH₂CH(CN)CH₂CH(CN)CH₃;
-C(CN)(CH₃)CH₂CH(CN)CH₃;
-(CH₂)₃CH(CN)CH₂CN;
-CH(CH₃)CH₂CH(CN)CH₂CN;
-CH(CH₂CH₃)CH(CN)CH₂CN;
-C(CN)(CH₂CN)CH₂CH₂CH₃;
-C(CH₃)₂CH(CN)CH₂CN;
-C(CN)(CH₂CN)CH(CH₃)₂;
-C(CH₃) (CH₂CN)CH₂CH₂CN;
-CH(CH₂CN)CH(CH₃)CH₂CN;
-CH₂CH(CH₂CN)CH₂CH₂CN;
-CH₂CH(CH₂CN)CH(CN)CH₃;
-C(CH₃)(CH₂CN)CH(CN)CH₃;
-CH(CH(CN)₂)CH₂CH₂CH₃;
-C(CN)₂CH₂CH₂CH₂CH₃;
-CH(CH₂CN)CH₂CH(CN)CH₃;
-CH(CH₂CH₂CN)CH(CN)CH₃;
-CH(CH₃)CH₂CH₂CH(CN)₂;
-CH(CH₂CH₃)CH₂CH(CN)₂;
-CH₂CH(CH₃)CH₂CH(CN)₂;
-C(CH₃)₂CH₂CH(CN)₂;
-CH₂CH₂CH₂C(CN)₂CH₃;
-CH(CH₃)CH₂C(CN)₂CH₃;
-CH(CH(CN)₂)CH(CH₃)₂;
-CH₂CH₂CH(CH₃)CH(CN)₂;
-CH(CH₃)CH(CH₃)CH(CN)₂;
and
-CH₂CH₂CH₂CH₂CH(CN)₂
and combinations thereof.

8. The fluorosilicon nitrile compound of claim 7, wherein the fluorosilicon nitrile compound contains, as substituents attached to the silicon atom, one fluorine atom, one cyanoalkyl group containing two cyano groups per cyanoalkyl group, and two C1-C8 alkyl groups, which are the same as or different from each other, preferably the fluorosilicon nitrile compound contains, as substituents attached to the silicon atom, two alkyl groups selected from the group consisting of methyl, ethyl, n-propyl, iso-propyl, n-butyl, sec-butyl, iso-butyl, tert-butyl and combinations thereof.

9. The fluorosilicon nitrile compound of claim 7, wherein the fluorosilicon nitrile compound contains, as substituents attached to the silicon atom, two fluorine atoms, one cyanoalkyl group containing two cyano groups per cyanoalkyl group and one C1-C8 alkyl group, preferably the fluorosilicon nitrile compound contains, as substituents attached to the silicon atom, two alkyl groups selected from the group consisting of methyl, ethyl, n-propyl, iso-propyl, n-butyl, sec-butyl, iso-butyl, tert-butyl and combinations thereof.

10. A method of making a fluorosilicon nitrile compound in accordance with claim 1, wherein the method comprises reacting a chlorosilicon nitrile compound with a fluorinating agent under conditions effective to exchange fluorine atoms for the chlorine atoms in the chlorosilicon nitrile compound and wherein the chlorosilicon nitrile compound has a total of four substituents attached to a silicon atom, wherein one or two of the substituents are chlorine atoms, one or two of the substituents are cyanoalkyl groups containing two cyano groups per cyanoalkyl group, which may be the same as or different from each other, and the remainder of the substituents, if any, are alkyl groups, which are the same as or different from each other, preferably the fluorinating agent is selected from the group consisting of HF, MF, MHF₂ and SbF₃, where M is Na, K, Rb, Cs or NH₄.

11. The method of claim 10, wherein the chlorosilicon nitrile compound is prepared by hydrosilylation of an alkene with a chloroalkylsilane, preferably the alkene is a cyanoalkene.

12. A method of making a fluorosilicon nitrile compound in accordance with claim 1, wherein the method comprises hydrosilylation of an alkene with a fluoroalkylsilane, preferably the alkene is a cyanoalkene.

## Patentansprüche

1. Fluorsiliciumnitrilverbindung mit insgesamt vier an ein Siliciumatom gebundenen Substituenten, wobei es sich bei einem oder zwei der Substituenten um Fluoratome handelt, es sich bei einem oder zwei der Substituenten um Cyanoalkylgruppen mit zwei Cyanogruppen pro Cyanoalkylgruppe, die gleich oder voneinander verschieden sind, handelt und es sich bei dem Rest der Substituenten, sofern vorhanden, um Alkylgruppen, die gleich oder voneinander verschieden sind, handelt.

2. Fluorsiliciumnitrilverbindung nach Anspruch 1, wobei es sich bei einem Substituenten um ein Fluoratom handelt, es sich bei einem Substituenten um eine Cyanoalkylgruppe mit zwei Cyanogruppen pro Cyanoalkylgruppe handelt und es sich bei zwei Substituenten um Alkylgruppen, die gleich oder voneinander verschieden sind, handelt oder wobei es sich bei einem Substituenten um ein Fluoratom handelt, es sich bei zwei Substituenten um Cyanoalkylgruppen mit zwei Cyanogruppen pro Cyanoalkylgruppe, die gleich oder voneinander verschieden sind, handelt und es sich bei einem Substituenten um eine Alkylgruppe handelt.

3. Fluorsiliciumnitrilverbindung nach Anspruch 1, wobei es sich bei zwei Substituenten um Fluoratome handelt, es sich bei einem Substituenten um eine Cyanoalkylgruppe mit zwei Cyanogruppen pro Cyanoalkylgruppe handelt und es sich bei einem Substituenten um eine Alkylgruppe handelt oder wobei es sich bei zwei Substituenten um Fluoratome handelt und es sich bei zwei Substituenten um Cyanoalkylgruppen mit zwei Cyanogruppen pro Cyanoalkylgruppe, die gleich oder voneinander verschieden sind, handelt.

4. Fluorsiliciumnitrilverbindung nach Anspruch 1, wobei es sich bei den Cyanoalkylgruppen um C2-C9-Cyanoalkylgruppen handelt.

5. Fluorsiliciumnitrilverbindung nach Anspruch 1, wobei mindestens eine Alkylgruppe vorliegt und es sich bei der Alkylgruppe um eine C1-C8-Alkylgruppe handelt.

6. Fluorsiliciumnitrilverbindung nach Anspruch 1, wobei die Cyanoalkylgruppen eine Cyanogruppe, die an einer endständigen Position eines Alkylrests oder an einer innenständigen Position eines Alkylrests substituiert ist, enthalten.

7. Fluorsiliciumnitrilverbindung nach Anspruch 1, wobei die Cyanoalkylgruppen aus der Gruppe bestehend aus
- (CH₂)₃C(CN)₂CH₃;
-CH(CN)CH(CN)CH₃;
-C(CN)(CH₃)CH₂CN;
-CH(CH₂CN)₂;
-CH(CN)CH₂CH₂CN;
-CH(CH₃)CH(CN)₂;
-C(CN)₂(CH₂CH₃);
-CH₂CH(CN)CH₂CN;
-C(CN)(CH₃)CH₂CN;
-C(CH₃)(CN)CH(CN)CH₂CH₃;
-C(CN)(CH₂CH₃)CH(CN)CH₃;
-CH (CH₂CN)CH₂CH₂CH₂CN;
-CH(CN)CH₂CH₂CH₂CH₂CN;
-CH₂CH(CN)CH₂CH₂CH₂CN;
-C(CH₃)(CN)CH₂CH₂CH₂CN;
-C(CH₃)(CH₂CH₃)CH(CN)₂;
-C(CN)₂CH(CH₃)CH₂CH₃;
-C(CN)₂CH₂CH(CH₃)₂;
-CH(CH(CN)₂)CH(CH₃)₂;
-C(CN)(CH₂CH₃)CH₂CH₂CN;
-CH(CH₃)CH(CN)CH₂CH₂CN;
-CH₂CH(CN)CH₂CH(CN)CH₃;
-C(CN)(CH₃)CH₂CH(CN)CH₃;
-(CH₂)₃CH(CN)CH₂CN;
-CH(CH₃)CH₂CH(CN)CH₂CN;
-CH(CH₂CH₃)CH(CN)CH₂CN;
-C(CN)(CH₂CN)CH₂CH₂CH₃;
-C(CH₃)₂CH(CN)CH₂CN;
-C(CN)(CH₂CN)CH(CH₃)₂;
-C(CH₃)(CH₂CN)CH₂CH₂CN;
-CH(CH₂CN)CH(CH₃)CH₂CN;
-CH₂CH(CH₂CN)CH₂CH₂CN;
-CH₂CH(CH₂CN)CH(CN)CH₃;
-C(CH₃)(CH₂CN)CH(CN)CH₃;
-CH(CH(CN)₂)CH₂CH₂CH₃;
-C(CN)₂CH₂CH₂CH₂CH₃;
-CH(CH₂CN)CH₂CH(CN)CH₃;
-CH(CH₂CH₂CN)CH(CN)CH₃;
-CH(CH₃)CH₂CH₂CH(CN)₂;
-CH(CH₂CH₃)CH₂CH(CN)₂;
-CH₂CH(CH₃)CH₂CH(CN)₂;
-C(CH₃)₂CH₂CH(CN)₂;
-CH₂CH₂CH₂C(CN)₂CH₃;
-CH(CH₃)CH₂C(CN)₂CH₃;
-CH(CH(CN)₂)CH(CH₃)₂;
-CH₂CH₂CH(CH₃)CH(CN)₂;
-CH(CH₃)CH(CH₃)CH(CN)₂
und
-CH₂CH₂CH₂CH₂CH(CN)₂
und Kombinationen davon ausgewählt sind.

8. Fluorsiliciumnitrilverbindung nach Anspruch 7, wobei die Fluorsiliciumnitrilverbindung als an das Siliciumatom gebundene Substituenten ein Fluoratom, eine Cyanoalkylgruppe mit zwei Cyanogruppen pro Cyanoalkylgruppe und zwei C1-C8-Alkylgruppen, die gleich oder voneinander verschieden sind, aufweist, vorzugsweise die Fluorsiliciumnitrilverbindung als an das Siliciumatom gebundene Substituenten zwei Alkylgruppen aus der Gruppe bestehend aus Methyl, Ethyl, n-Propyl, Isopropyl, n-Butyl, sec-Butyl, Isobutyl, tert-Butyl und Kombinationen davon aufweist.

9. Fluorsiliciumnitrilverbindung nach Anspruch 7, wobei die Fluorsiliciumnitrilverbindung als an das Siliciumatom gebundene Substituenten zwei Fluoratome, eine Cyanoalkylgruppe mit zwei Cyanogruppen pro Cyanoalkylgruppe und eine C1-C8-Alkylgruppe aufweist, vorzugsweise die Fluorsiliciumnitrilverbindung als an das Siliciumatom gebundene Substituenten zwei Alkylgruppen aus der Gruppe bestehend aus Methyl, Ethyl, n-Propyl, Isopropyl, n-Butyl, sec-Butyl, Isobutyl, tert-Butyl und Kombinationen davon aufweist.

10. Verfahren zur Herstellung einer Fluorsiliciumnitrilverbindung gemäß Anspruch 1, wobei das Verfahren die Umsetzung einer Chlorsiliciumnitrilverbindung mit einem Fluorierungsmittel unter zum Austausch der Chloratome in der Chlorsiliciumnitrilverbindung gegen Fluoratome wirksamen Bedingungen umfasst und wobei die Chlorsiliciumnitrilverbindung insgesamt vier an ein Siliciumatom gebundene Substituenten aufweist, wobei es sich bei einem oder zwei der Substituenten um Chloratome handelt, es sich bei einem oder zwei der Substituenten um Cyanoalkylgruppen mit zwei Cyanogruppen pro Cyanoalkylgruppe, die gleich oder voneinander verschieden sein können, handelt und es sich bei dem Rest der Substituenten, sofern vorhanden, um Alkylgruppen, die gleich oder voneinander verschieden sind, handelt, vorzugsweise das Fluorierungsmittel aus der Gruppe bestehend aus HF, MF, MHF₂ und SbF₃ ausgewählt wird, wobei M für Na, K, Rb, Cs oder NH₄ steht.

11. Verfahren nach Anspruch 10, wobei die Chlorsiliciumnitrilverbindung durch Hydrosilylierung eines Alkens mit einem Chloralkylsilan hergestellt wird, vorzugsweise es sich bei dem Alken um ein Cyanoalken handelt.

12. Verfahren zur Herstellung einer Fluorsiliciumnitrilverbindung gemäß Anspruch 1, wobei das Verfahren die Hydrosilylierung eines Alkens mit einem Fluoralkylsilan umfasst, vorzugsweise es sich bei dem Alken um ein Cyanoalken handelt.

## Revendications

1. Composé de fluorosilicium nitrile possédant un total de quatre substituants fixés à un atome de silicium, un ou deux des substituants étant des atomes de fluor, un ou deux des substituants étant des groupes cyanoalkyle contenant deux groupes cyano par groupe cyanoalkyle, qui sont identiques ou différents l'un de l'autre, et les substituants restants, le cas échéant, étant des groupes alkyle, qui sont identiques ou différents l'un de l'autre.

2. Composé de fluorosilicium nitrile selon la revendication 1, un substituant étant un atome de fluor, un substituant étant un groupe cyanoalkyle contenant deux groupes cyano par groupe cyanoalkyle, et deux substituants étant des groupes alkyle, qui sont identiques ou différents l'un de l'autre ou un substituant étant un atome de fluor, deux substituants étant des groupes cyanoalkyle contenant deux groupes cyano par groupe cyanoalkyle, qui sont identiques ou différents l'un de l'autre, et un substituant étant un groupe alkyle.

3. Composé de fluorosilicium nitrile selon la revendication 1, deux substituants étant des atomes de fluor, un substituant étant un groupe cyanoalkyle contenant deux groupes cyano par groupe cyanoalkyle, et un substituant étant un groupe alkyle ou deux substituants étant des atomes de fluor et deux substituants étant des groupes cyanoalkyle contenant deux groupes cyano par groupe cyanoalkyle, qui sont identiques ou différents l'un de l'autre.

4. Composé de fluorosilicium nitrile selon la revendication 1, les groupes cyanoalkyle étant des groupes C₂₋₉-cyanoalkyle.

5. Composé de fluorosilicium nitrile selon la revendication 1, au moins un groupe alkyle étant présent et le groupe alkyle étant un groupe C₁₋₈-alkyle.

6. Composé de fluorosilicium nitrile selon la revendication 1, les groupes cyanoalkyle contenant un groupe cyano qui est substitué au niveau d'une position terminale d'un radical alkyle ou au niveau d'une position interne d'un radical alkyle.

7. Composé de fluorosilicium nitrile selon la revendication 1, les groupes cyanoalkyle étant choisis dans le groupe constitué par :
-(CH₂)₃C(CN)₂CH₃;
-CH(CN)CH(CN)CH₃;
-C(CN)(CH₃)CH₂CN;
-CH(CH₂CN)₂;
-CH(CN)CH₂CH₂CN;
-CH(CH₃)CH(CN)₂;
-C(CN)₂(CH₂CH₃);
-CH₂CH(CN)CH₂CN;
-C(CN)(CH₃)CH₂CN;
-C(CH₃)(CN)CH(CN)CH₂CH₃;
-C(CN)(CH₂CH₃)CH(CN)CH₃;
-CH(CH₂CN)CH₂CH₂CH₂CN;
-CH(CN)CH₂CH₂CH₂CH₂CN;
-CH₂CH(CN)CH₂CH₂CH₂CN;
-C(CH₃)(CN)CH₂CH₂CH₂CN;
-C(CH₃)(CH₂CH₃)CH(CN)₂;
-C(CN)₂CH(CH₃)CH₂CH₃;
-C(CN)₂CH₂CH(CH₃)₂;
-CH(CH(CN)₂)CH(CH₃)₂;
-C(CN)(CH₂CH₃)CH₂CH₂CN;
-CH(CH₃)CH(CN)CH₂CH₂CN;
-CH₂CH(CN)CH₂CH(CN)CH₃;
-C(CN)(CH₃)CH₂CH(CN)CH₃;
-(CH₂)₃CH(CN)CH₂CN;
-CH(CH₃)CH₂CH(CN)CH₂CN;
-CH(CH₂CH₃)CH(CN)CH₂CN;
-C(CN)(CH₂CN)CH₂CH₂CH₃;
-C(CH₃)₂CH(CN)CH₂CN;
-C(CN)(CH₂CN)CH(CH₃)₂;
-C(CH₃)(CH₂CN)CH₂CH₂CN;
-CH(CH₂CN)CH(CH₃)CH₂CN;
-CH₂CH(CH₂CN)CH₂CH₂CN;
-CH₂CH(CH₂CN)CH(CN)CH₃;
-C(CH₃)(CH₂CN)CH(CN)CH₃;
-CH(CH(CN)₂)CH₂CH₂CH₃;
-C(CN)₂CH₂CH₂CH₂CH₃;
-CH(CH₂CN)CH₂CH(CN)CH₃;
-CH(CH₂CH₂CN)CH(CN)CH₃;
-CH(CH₃)CH₂CH₂CH(CN)₂;
-CH(CH₂CH₃)CH₂CH(CN)₂;
-CH₂CH(CH₃)CH₂CH(CN)₂;
-C(CH₃)₂CH₂CH(CN)₂;
-CH₂CH₂CH₂C(CN)₂CH₃;
-CH(CH₃)CH₂C(CN)₂CH₃;
-CH(CH(CN)₂)CH(CH₃)₂;
-CH₂CH₂CH(CH₃)CH(CN)₂;
-CH(CH₃)CH(CH₃)CH(CN)₂;
et
-CH₂CH₂CH₂CH₂CH(CN)₂
et des combinaisons correspondantes.

8. Composé de fluorosilicium nitrile selon la revendication 7, le composé de fluorosilicium nitrile contenant, comme substituants fixés à l'atome de silicium, un atome de fluor, un groupe cyanoalkyle contenant deux groupes cyano par groupe cyanoalkyle, et deux groupes C₁₋₈-alkyle, qui sont identiques ou différents l'un de l'autre, préférablement le composé de fluorosilicium nitrile contenant, comme substituants fixés à l'atome de silicium, deux groupes alkyle choisis dans le groupe constitué par méthyle, éthyle, n-propyle, iso-propyle, n-butyle, sec-butyle, iso-butyle, tert-butyle et des combinaisons correspondantes.

9. Composé de fluorosilicium nitrile selon la revendication 7, le composé de fluorosilicium nitrile contenant, comme substituants fixés à l'atome de silicium, deux atomes de fluor, un groupe cyanoalkyle contenant deux groupes cyano par groupe cyanoalkyle et un groupe C₁₋₈-alkyle, préférablement le composé de fluorosilicium nitrile contenant, comme substituants fixés à l'atome de silicium, deux groupes alkyle choisis dans le groupe constitué par méthyle, éthyle, n-propyle, iso-propyle, n-butyle, sec-butyle, iso-butyle, tert-butyle et des combinaisons correspondantes.

10. Procédé de fabrication d'un composé de fluorosilicium nitrile selon la revendication 1, le procédé comprenant la mise en réaction d'un composé de chlorosilicium nitrile avec un agent de fluoration dans des conditions efficaces pour échanger les atomes de chlore dans le composé de chlorosilicium nitrile par des atomes de fluor et le composé de chlorosilicium nitrile possédant un total de quatre substituants fixés à l'atome de silicium, un ou deux des substituants étant des atomes de chlore, un ou deux des substituants étant des groupes cyanoalkyle contenant deux groupes cyano par groupe cyanoalkyle, qui peuvent être identiques ou différents l'un de l'autre, et les substituants restants, le cas échéant, étant des groupes alkyle, qui sont identiques ou différents l'un de l'autre, préférablement l'agent de fluoration étant choisi dans le groupe constitué par HF, MF, MHF₂ et SbF₃, où M est Na, K, Rb, Cs, ou NH₄.

11. Procédé selon la revendication 10, le composé de chlorosilicium nitrile étant préparé par hydrosilylation d'un alcène avec un chloroalkylsilane, préférablement l'alcène étant un cyanoalcène.

12. Procédé de fabrication d'un composé de fluorosilicium nitrile conformément à la revendication 1, le procédé comprenant l'hydrosilylation d'un alcène avec un fluoroalkylsilane, préférablement l'alcène étant un cyanoalcène.
